# EUROPEAN PATENT SPECIFICATION

(11) **EP 1 252 829 B1**
(45) Date of publication and mention of the grant of the patent: **13.06.2007**
(21) Application number: 02006667.6
(22) Date of filing: 26.03.2002
(51) Int. Cl.: A23P 1/04, A23L 1/22, A23L 1/00

(54) **Coating agent and coated powder**
Beschichtungsmaterial und beschichtetes Pulver
Matériau d'enrobage et poudre enrobée

(30) Priority: 26.04.2001 JP 2001129850
(43) Date of publication of application: 30.10.2002
(73) Proprietor: Takasago International Corporation, Tokyo 144-8721 (JP)
(72) Inventor: Tanaka, Shigeru, Takasago International Corp., Hiratsuka-shi, Kanagawa 254-0073 (JP); Goto, Yukio, Takasago International Corporation, Hiratsuka-shi, Kanagawa 254-0073 (JP); Ishii, Hiroshi, Takasago International Corporation, Hiratsuka-shi, Kanagawa 254-0073 (JP)
(74) Representative: Reinhard - Skuhra - Weise & Partner

(56) References cited:
- EP-A- 0 410 495
- EP-A- 1 034 705
- US-A- 3 711 301
- US-A- 4 863 745

## Description

### FIELD OF THE INVENTION

This invention relates to coated powders which can be favorably used in various processed foods for imparting aroma and flavor, in particular, foods to be processed by heating, for example, foods for microwave cooking and baked foods; coating agents which are used in producing these coated powders; a process for producing the coated powders with the use of these coating agents; and foods and drinks containing the coated powders.

### BACKGROUND OF THE INVENTION

Various substances such as flavors, acidulants, sweeteners, seasonings, vitamins, coloring agents, spices, and functional substances are added to various foods and drinks in order to improve the preference or from a nutritional or functional viewpoint. To achieve controlled and efficient release, convenience in handling, improved stability of additives to heat, oxygen or light, etc., it has been a common practice to powder or granulate these additives, which may be in the form of liquids, powders or crystals, by using solutions of natural gums such as acacia gum gum, solutions of proteins such as gelatin or solutions of processed starch such as dextrin as a carrier. In case of adding these powdered or granulated food additives to foods, drinks or the like, there arise troubles caused by the powders during storage, for example, moisture absorption, caking, vaporization of components, deterioration of components, color change or discoloration, thereby reducing the commercial value. In case of adding a powdered flavor to a water-containing food to be heated to a high temperature, in particular, there arises a difficulty that the flavor is vaporized from the powder during heating and thus the aroma cannot be sustained, or the flavor components are partly vaporized and thus the inherent aroma is lost, thereby seriously damaging the commercial value of the product. Thus, some methods for solving these difficulties have been proposed.

It is well known that a modified cellulose such as methylcellulose, ethylcellulose, hydroxypropylcellulose, hydroxypropylmethylcellulose or ethylmethylcellulose forms a solidified gel insoluble in water at a high temperature and the gel reversibly becomes water-soluble with a decrease in temperature (S. Nakura, S. Nakamura and Y. Onnda: Kobunshi Ronbunshu, 38, 133 (1981)). Known examples of the application of this property of modified celluoses to food processing include the technique of protecting additives in canned soups which are changed or lost during heat sterilization by taking advantage of the property of methylcellulose of forming a water-insoluble gel at a high temperature (U.S. Patent No. 6,056,992) and the technique of surface-coating water-soluble flavor capsules such as a spray dried powder (as a core material) with a modified cellulose thereby making the core material hardly soluble in water at a high temperature and protecting the flavor and, at the same time, allowing the core material to melt in water at ordinary temperature (for example, in the mouth) so as to enable the release of the aroma (WO 00/16643)

US Patent No. 3,711,301 discloses the manufacture of granular seasoning products which are coated with an edible and non hydroscopic coating material. European patent application No. 410495 A2 discloses an edible diffusion retarding fat-based film for food products based upon a blend of one or more polyol fatty acid polyesters. US Patent No. 4,863,745 discloses a chewing gum with a delayed release sweetener. This sweetener may be coated with modified cellulose, gums, shellac, maltodextrins, gelatins, starches and lactose. Furthermore, the coating mixture contains zein.

### SUMMARY OF THE INVENTION

A modified cellulose is a water-soluble cellulose ether which is obtained by preparing an alkali solution of cellulose employed as the starting material with the use of sodium hydroxide and reacting it with an etherifying agent (for example, methyl chloride). As described above, some examples have been reported, wherein a coated core material is protected by taking advantage of the property that a modified cellulose forms a water-insoluble gel at a high temperature and the gel reversibly becomes water-soluble at ordinary temperature. However, this property of modified celluloses depends on the type of substituent(s) introduced in cellulose molecule and the degree of substitution. That is to say, there is a difficulty that the physical properties of a coating film cannot be controlled in view of the type of the core material, the purpose of using the coated powder or the mode of the utilization.

An objective of the present invention is to provide a coating agent with the use of modified celluoses, by which these difficulties encountering in the coating agents with the use of cellulose derivatives can be solved not by controlling the type of the substituents of cellulose molecule, the degree of substitution, etc. by chemical reactions but by controlling the properties of the coating agent by using appropriate material(s) to be used together with the modified cellulose and thus conveniently controlling the properties of the coating film depending on the type of the core material and the purpose of using the coated powder; a coated powder which is coated with the use of the coating agent; a process for producing the coated powder; and a food or drink containing the coated powder.

Another object of the present invention is to provide a coating agent with the use of modified celluloses which can control the vaporization of flavor composition constituting the core material in the heating and cooling; a coated powder which is coated with the use of these coating agent; a process for producing the coated powder; and a food or drink containing the coated powder.

To solve the above-described difficulties, the inventors have conducted extensive studies and consequently found that the properties of a coating agent comprising a modified cellulose can be controlled by using an edible water-soluble additive and/or an edible polymer substance together, thereby completing the present invention.

Accordingly, the present invention provides a coating agent comprising (a) a modified cellulose and (b) an edible water-soluble additive and/or an edible polymer substance.

The invention further provides a coated powder comprising a core material which is solid at ordinary temperature having been coated with a coating agent comprising (a) a thermally reversible gel forming water soluble cellulose ether and (b) an edible water-soluble additive and/or an edible polymer substance in an amount of 0,005 to 0,75 parts by weight of said cellulose ether selected from the group consisting of sucrose fatty acid esters, polyglycerol fatty acid esters, glucose, fructose, sucrose, lactose, maltose, sugar alcohols, water soluble natural gums, starch, starch derivatives and proteins.

The invention further provides a process for producing a coated powder, which comprises coating a core material with a coating agent comprising a homogeneous mixture of a modified cellulose and an edible water-soluble additive and/or an edible polymer substance, wherein the amount of the coating agent is from about 0.0006 to about 0.60 parts by weight per part by weight of the core material.

### DETAILED DESCRIPTION OF THE INVENTION

The invention furthermore provides a food or a drink comprising the above-described coated powder.

Now, the invention will be described in greater detail.

The term "solid at ordinary temperature" as used in this specification means that the melting point is about 15°C or higher, preferably about 20°C or higher, more preferably about 25°C or higher, and most preferably about 30°C or higher. The term "edible" as used in this specification means that the substance is acceptable as a food, a drink, an additive for a food or a drink, or the like.

The core material to be coated with a coating agent in the invention is a material which is solid at ordinary temperature. Coating with the coating agent according to the invention is particularly effective for a material which should be protected from deterioration caused by vaporization of components, changes in components, color change, discoloration, etc. and preferably can be quickly released in the presence of water. Examples of the core material which is solid at ordinary temperature include flavor compositions, coloring materials, acidulants, vitamins, sweeteners, seasonings, spices, functional substances, and the like materials which are solid at ordinary temperature.

The appropriate particle size of such a core material varies depending on the coating method and the type of the core material and is not particularly limited. In general, the particle size of the core material ranges from 5 to 6000 µm, preferably from 50 to 800 µm. Either one of these core materials which are solid at ordinary temperature or a mixture of two or more thereof may be used. Next, the flavor compositions, coloring materials, acidulants, vitamins, sweeteners, seasonings, spices and functional substances to be used as a core material in the coated powder of the present invention will be described in detail.

First, examples of the flavor compositions which are solid at ordinary temperature include flavors which are solid at ordinary temperature (menthol, vanillin, ethyl vanillin, cinnamic acid, methyl cinnamate, cinnamic alcohol, camphor, piperonal, maltol, ethyl maltol, d-borneol, methyl N-methylanthranilate, methyl β-naphthyl ketone, etc.) and powdered flavors produced by powdering flavors commonly employed as food flavors.

Examples of the flavors commonly employed as food flavors include natural flavor materials such as essential oils obtained from plant materials by pressing, steam distillation and the like, oleoresins obtained by extracting plant materials with a solvent containing carbon dioxide, filtering off the insoluble matters and then eliminating the solvent, recovered flavors obtained by, in the step of concentrating fruit juice, supplying the aroma components distilled off together with water into a recovery unit and thus recovering as an oil or a thick aqueous solution, extracts obtained by bringing animal or plant materials into contact with various solvents, and thus extracting required aroma components from the materials followed by the elimination of the solvents by distillation and concentration, if needed, isolated flavors obtained by isolating a single compound in a pure form from a mixture, cooking flavors formed by heating food materials, and microbial and enzymatic flavors formed by biochemical reactions with the use of milk materials, lipids, proteins and saccharides as the substrate, and synthetic flavors synthesized chemically such as amyl acetate, benzyl alcohol, coumarin, geraniol, phenyl ethyl alcohol and terpineol. Examples of the natural flavor materials include bonito flake extract, kelp extract, crab extract, oyster extract, beef extract, chicken extract, pork extract, onion extract, carrot extract, orange juice, lemon juice and grape juice. It is also possible to use a combination of two or more of these flavor materials depending on the purpose, etc.

The flavor may be powdered by dissolving and mixing the aimed material in an aqueous solution of, for example, dextrin, starch, a natural gum such as acacia gum, or a protein such as gelatin or casein and then spray-drying. Alternatively, the spray-drying method may be used, wherein an emulsifier commonly employed in food manufacturing (sucrose fatty acid ester, lecithin, polyglycerol fatty acid ester, processed starch, Quillaja saponin, etc.) is added to the above-described liquid mixture to thereby emulsify the aimed material followed by spray-drying; the extrusion molding method wherein the aimed material is added to a sugar solution which is prepared by adding a definite amount of water to one of various sugars (sucrose, maltose, maltodextran, etc.) and sugar alcohols (palatinit, maltitol, etc.) or a mixture of two or more of the same and dissolving by heating to thereby control the sugar concentration or a solution of a mixture of sugar(s) with a protein prepared by the same method, and, during homogeneously stirring, the resultant mixture is molded, dried and powdered; the coacervation method with the use of the phase separation by using gelatin, acacia gum, etc.; the freeze-drying method; the molecule inclusion method; the adsorption method; the solidification/grinding method; and the like. The term a "powdered material" as used hereinafter means a material which has been powdered by such a method as described above.

The coloring materials which are solid at ordinary temperature are not particularly restricted, as long as they are edible. Particular examples thereof include natural coloring materials such as cochineal, gardenia, grape pericarp and monascus color and powdered materials of synthetic coloring materials. It is also possible to use a combination of two or more of these coloring materials depending on the purpose or the like.

Examples of the acidulants which are solid at ordinary temperature include organic acids such as citric acid, fumaric acid, dl-malic acid and ascorbic acid, powdered materials thereof and powdered materials of liquid acidulants. It is also possible to use a combination of two or more of these acidulants depending on the purpose or the like.

Examples of the vitamins which are solid at ordinary temperature include vitamin B₁, vitamin B₂, vitamin B₁₂, vitamin C, vitamin D, vitamin L, vitamin K, vitamin U, lipoic acid, nicotinic acid, salts thereof such as sodium salts and hydrochlorides, derivatives thereof such as acetates, powdered materials obtained therefrom and powdered materials of oily vitamins. It is also possible to use a combination of two or more of these vitamins depending on the purpose or the like.

Examples of the sweeteners which are solid at ordinary temperature include fructose, sucrose, aspartame, palatinose, raffinose, trehalose, erythritol, xylitol, powdered materials thereof and powdered materials of liquid sweeteners. It is also possible to use a combination of two or more of these sweeteners depending on the purpose or the like.

Examples of the seasonings which are solid at ordinary temperature include chemical seasonings such as sodium glutamate and nucleic acid-based seasonings and seasonings extracted from natural food materials or obtained by decomposing the same. Either one of these seasonings or a combination of two or more thereof may be used.

Examples of the spices which are solid at ordinary temperature include spicy spices such as clove, garlic and cinnamon, herb spices such as basil and parsley and seed spices such as cumin and anis. Either one of these spices or a combination of two or more thereof may be used.

Examples of the functional substances which are solid at ordinary temperature include powdered materials of animal and vegetable fats such as fish oils (DHA, etc.), linoleic acid, linolenic acid, lecithin and evening primrose oil, powders of crude drugs such as carrot and aloe, chitosan, royal jelly and propolis. Either one of these functional substances or a combination of two or more thereof may be used.

The coating agent to be used for coating the above-described core material in the invention contains at least (a) a modified thermally reversible gel forming water soluble cellulose ether and (b) an edible water-soluble additive and/or an edible polymer substance as the main components. Examples of the modified cellulose preferably used in the invention include methylcellulose, hydroxymethylcellulose, hyderoxyethylcellulose and the like which are soluble in water and capable of forming a gel which shows thermally reversible gel forming characteristics. Among all, it is particularly preferable to use a modified cellulose having a concentration as low as possible (for example, 15,000 Pa•S in 2% aqueous solution at 20°C) in the state of an aqueous solution.

The edible water-soluble additive and the edible polymer substance constituting the coating agent according to the invention include sucrose fatty acid esters (for example, HLB being 13 to 15 and the fatty acid moieties being hardened beef tallow fatty acids etc. such as stearic acid and palmitic acid), water-soluble fats such as polyglycerol fatty acid esters and phosphatidylcholine, monosaccharides such as glucose and fructose, oligosaccharides such as sucrose, lactose, trehalose, and maltose, natural water-soluble gums such as acacia gum, locust bean gum, carrageenan and xanthan gum, starch originating in natural materials, cyclodextrin, maltodextrin, sugar alcohols such as reduced palatinose, maltitol, erythritol and xyltiol, alpha-starch, starch derivatives, pectin, glucomannan and proteins such as gluten, casein, gelatin and zein. Either one of these edible water-soluble additives and edible polymer substances or a combination of two or more thereof may be used.

The coating agent to be used in coating the core material in the invention can be prepared by dissolving or dispersing the modified cellulose in a heated aqueous solution, then dissolving or dispersing the edible water-soluble additive and/or the edible polymer substance in this aqueous solution or aqueous dispersion and cooling the obtained liquor to give a homogeneous liquor. In case where these components are soluble in a solvent in common, the coating agent can be prepared by dissolving these components separately in the solvent and then mixing the obtained solutions or dissolving the individual components together in the solvent to give a homogeneous solution of the mixture. As the solvent commonly employed in this step, it is usually preferable from the viewpoint of safety to use ethanol or an aqueous ethanol solution. In this case, if needed, an emulsifier employed in food manufacturing such as saponin may be used.

The ratio of the edible water-soluble additive and/or the edible polymer substance to the modified cellulose is not strictly limited but can be appropriately varied depending on the stability, release speed, etc. of the core material required for the purpose. In case of using the modified cellulose in a large amount, for example, the vaporization of the core material such as a flavor can be regulated in heating, the moisture resistance of the coated powder and the antioxidative properties of the core material can be improved and the release of the core material into water can be reduced. By adding the edible water-soluble additive or the edible polymer substance, the solubility of the coated powder can be improved. In case of using the edible water-soluble additive or the edible polymer substance in a large amount, the vaporization of the flavor can be enhanced in heating and thus improved aroma release can be achieved when a food or a drink containing the coated powder of the invention is put into the mouth. The edible water-soluble additive and/or the edible polymer substance are employed in an amount of from 0.005 to 0.75 parts by weight, preferably from, for example, about 0.01 to about 0.6 parts by weight per part by weight of the modified cellulose.

The core material may be coated with the coating agent by utilizing a known method. For example, use can be made of the spray drying method, the fluidized bed coating method, the centrifugal coating method or the contact/collision coating method.

In the fluidized bed coating method, the core material powder is maintained in a flowable state and coated by spraying a liquid coating agent thereto. Although appropriate production conditions may vary depending on the type and particle size of the core material employed, the viscosity of the coating agent and the like, it is needed to employ such conditions (moisture content, etc.) as to minimize the granulation of the coated powder. It is also needed to maintain the chamber at a temperature range allowing sufficient evaporation of the solvent.

In the centrifugal coating method, the core material is suspended in a modified cellulose-containing coating agent and the resultant suspension is supplied onto a rotating face of a rotating disc. Thus the suspension is sprayed and dried due to the centrifugal force, thereby coating the core material. In this process, appropriate production conditions (rotational speed of the rotating disc, rotating disc temperature, rotating disc size, etc.) may vary depending on the type and particle size of the core material employed, the viscosity of the suspension, the coating material employed, the particle size of the coated powder to be produced, etc. However, it is necessary that the surface temperature of the rotating disc is controlled to the melting point of the lipid in the coating agent cr higher and the atmospheric temperature is controlled to the melting point of the lipid or lower.

In the contact/collision coating method, the above-described modified cellulose-containing coating agent is dried and ground. Then it is brought into contact and collision with the powdery core material by using a mixing/dispersing type granulator such as a ball mill, a mortar or a mixer to thereby coat the core material. Appropriate operation conditions vary depending on the core material employed, the type and particle size of the core material, the apparatus employed, etc.

The ratio of the coating agent to the core material is not strictly restricted and can be appropriately varied depending on the stability of the core material required for the aimed purpose, the release characteristics of the core material and the like. In general, the coating agent may be used in an amount of from about 0.01 to 10 parts by weight, preferably from about 0.03 to 5 parts by weight, per part by weight of the core material.

The coated powder according to the invention makes it possible to control the release of the core material by varying the coating ratio and the coating composition. Thus, it is widely applicable to various purposes. In particular, it can be preferably employed in foods to be cooked by heating, powdery foods such as hot cake mixes and powdery soups, snacks, cookies, cakes, baked confectionery doughs, frozen foods, retort foods and food products for microwave cooking.

The amount of the coated powder according to the invention to be added to these foods for imparting aroma widely varies depending on the type of the coated powder and the type of the food or drink to which the coated powder is added. In general, it is added in an amount of from 0.00001 to 0.10 parts by weight, preferably from 0.0005 to 0.05 parts by weight, per part by weight of the food or drink.

Now, the invention will be illustrated in greater detail by reference to the following Examples. However, it is to be understood that the invention is not construed as being restricted thereto. Referential Example 1 provides an example of the production of the core material to be used in the Examples.

### REFERENTIAL EXAMPLE 1

### Preparation of extrusion flavor containing lemon flavor

260 g of water and 440 g of sucrose employed as a carrier were mixed with 360 g of dextrin (Pinedex #1, manufactured by Matsutani Chemical Industry Co., Ltd.) under heating to give a molten matter. Then 90 g of a lemon flavor (manufactured by Takasago International Corporation) was added thereto and the mixture was uniformly mixed by stirring. The resultant mixture was supplied into an extruder provided with an extrusion plate, extruded and dried to give an extrusion flavor containing the lemon flavor.

### EXAMPLE 1

To 100 g of water was added 20 g of methylcellulose (Metolose SM-4, manufactured by Shin-Etsu Chemical Co., Ltd.) and dispersed therein with heating. Then 10 g of fructose (manufactured by Junsei Chemical Co., Ltd.) was added thereto and dissolved therein. Under cooling and stirring, 400 g of ethanol (95%, manufactured by Junsei Chemical Co., Ltd.) was added thereto to give 530 g of a homogeneous coating agent.

### EXAMPLE 2

500 g of the extrusion flavor containing the lemon flavor of Referential Example 1 was supplied into a Multiplex Model MP-01 (manufactured by Powrex Corporation). Then it was coated by spraying 530 g of the coating agent prepared in Example 1 at a blowing temperature of 60 to 65°C and an exhaust temperature of 30 to 70°C and at a spraying speed of 2 to 3 g/min while maintaining the flowable state. Thus, 497 g of a coated powdered flavor was obtained.

### EXAMPLE 3

To 100 g of water was added 20 g of methylcellulose (Metolose SM-4, manufactured by Shin-Etsu Chemical Co., Ltd.) and dispersed therein with heating. Then 10 g of sucrose (manufactured by Junsei Chemical Co., Ltd.) was added thereto and dissolved therein. Under cooling and stirring, 400 g of ethanol (95%, manufactured by Junsei Chemical Co., Ltd.) was added thereto to give 530 g of a homogeneous coating agent.

### EXAMPLE 4

500 g of the extrusion flavor containing the lemon flavor of Referential Example 1 was supplied into a Multiplex Model MP-01 (manufactured by Powrex Corporation). Then it was coated by spraying 530 g of the coating agent prepared in Example 3 at a blowing temperature of 60 to 65°C and an exhaust temperature of 30 to 70°C and at a spraying speed of 2 to 3 g/min while maintaining the flowable state. Thus, 502 g of a coated powdered flavor was obtained.

### EXAMPLE 5

To 100 g of water was added 20 g of methylcellulose (Metolose SM-4, manufactured by Shin-Etsu Chemical Co., Ltd.) and dispersed therein with heating. Then 10 g of sorbitan fatty acid ester (Sorgen FS-700, manufactured by Dai-ichi Kogyo Seiyaku Co., Ltd.) was added thereto and dissolved therein. Under cooling and stirring, 400 g of ethanol (95%, manufactured by Junsei Chemical Co., Ltd.) was added thereto to give 530 g of a homogeneous coating agent.

### EXAMPLE 6

500 g of the extrusion flavor containing the lemon flavor of Referential Example 1 was supplied into a Multiplex Model MP-01 (manufactured by Powrex Corporation). Then it was coated by spraying 530 g of the coating agent prepared in Example 5 at a blowing temperature of 60 to 65°C and an exhaust temperature of 30 to 70°C and at a spraying speed of 2 to 3 g/min while maintaining the flowable state. Thus, 500 g of a coated powdered flavor was obtained.

### COMPARATIVE EXAMPLE 1

To 60 g of water was added 30 g of methylcellulose (Metolose SM-4, manufactured by Shin-Etsu Chemical Co., Ltd.) and dispersed therein with heating. Under cooling and stirring, 500 g of ethanol (95%, manufactured by Junsei Chemical Co., Ltd.) was added thereto to give 590 g of a homogeneous coating agent.

500 g of the extrusion flavor containing the lemon flavor of Referential Example 1 was supplied into a Multiplex Model MP-01 (manufactured by Powrex Corporation). Then it was coated by spraying 590 g of the above-described coating agent at a blowing temperature of 60 to 65°C and an exhaust temperature of 30 to 70°C and at a spraying speed of 2 to 3 g/min while maintaining the flowable state. Thus, 499 g of a coated powdered flavor was obtained.

### COMPARATIVE EXAMPLE 2

200 g of the extrusion flavor containing the lemon flavor of Referential Example 1 was thoroughly mixed with 10 g of palm hardened fat (SPF1W, manufactured by Fuji Oil Co., Ltd.) to thereby give 210 g of a coated powdered flavor.

### EXAMPLE 7

The coated powdered flavor prepared in Example 2 was added at a ratio of 1% to a dough having the following composition and thus lemon flavored cookies were prepared. The cookies thus prepared were regarded as the invention product 1 and subjected to a sensory evaluation.

| Component | Part by weight |
|---|---|
| soft wheat flour | 150.0 |
| shortening | 135.0 |
| powdery sugar | 127.5 |
| egg albumen | 90.0 |
| sodium chloride | 0.75 |
| water | 22.5 |

### EXAMPLES 8 AND 9

Cookies were prepared by the same method as in Example 7 but using the coated powdered flavors prepared in Examples 4 and 6 as a substitute for the coated powdered flavor of Example 2. The cookies thus prepared were regarded respectively as the invention products 2 and 3 and subjected to the sensory evaluation.

### COMPARATIVE EXAMPLES 3 AND 4

Cookies were prepared by the same method as in Example 7 but using the coated powdered flavors prepared in Comparative Examples 1 and 2 as a substitute for the coated powdered flavor of Example 2. The cookies of Comparative Examples 3 and 4 thus prepared were regarded respectively as the comparative products 1 and 2 and subjected to the following sensory evaluation.

### SENSORY EVALUATION 1

The cookies of the invention products 1 and 2 and the comparative product 1 were taken and evaluated in the quickness of the aroma release. As a result, the evaluation rank was as follows: the invention product 1 > the invention product 2> the comparative product 1.

These results indicate that the dissolution speed of methylcellulose at ordinary temperature can be controlled by adding an appropriate edible water-soluble substance.

### SENSORY EVALUATION 2

The cookies of the invention product 3 and the comparative products 1 and 2 were subjected to a sensory evaluation by using 5 skilled panelists. The evaluation was made the following 5 grades on the aroma strength (aroma remaining during baking), and the quickness and strength of the aroma release in the mouth (the data is expressed in the average of 5 panelists).

### Evaluation criteria:

A: very good.
B: good.
C: moderate.
D: somewhat poor.
E: poor.

**TABLE 1**

| | Invention product 1 | Comparative product 1 | Comparative product 2 |
|---|---|---|---|
| Aroma strength (during baking) | A | A | E |
| Quickness in release (in mouth) | A | C | C |
| Strength (in mouth) | A | A | C |
| Total evaluation* | 100 | 87 | 47 |

| | | | |
|---|---|---|---|
| *: The score of each panelist is expressed numerically (A = 5 to E = 1) and the sum (full marks = 15) is shown on a maximum scale of 100 points. | | | |

In the above evaluation, the skilled panelists stated that the invention product 3 was superior to the comparative product 1 in all of the items, i.e., total evaluation, aroma remaining during baking, quickness of the aroma release in the mouth and strength. That is to say, the sample containing methylcellulose and sorbitan fatty acid ester was almost comparable or somewhat superior to the sample containing methylcellulose alone in the protection of the flavor in heating. However, the former sample showed an improvement in the quickness of the aroma release in the mouth when the cookies were taken. This fact indicates that the addition of the edible water-soluble substance to methylcellulose makes it possible to improve the solubility in water after returning to ordinary temperature without reducing the effect of methylcellulose of protecting the flavor by the reversible gel formation at a high temperature. Compared with the comparative product 2 with the use of the fat commonly used as coating agents, the invention product 3 was superior in all of the items evaluated.

### EXAMPLE 10

20 g of methylcellulose (Metolose SM-4, manufactured by Shin-Etsu Chemical Co., Ltd.) was added to 500 g of water and dispersed therein with heating. Then 10 g of pullulan (F20, manufactured by Hayashibara Co., Ltd.) was added thereto and dissolved. The obtained solution was cooled and stirred to give 530 g of a homogeneous coating agent.

### EXAMPLE 11

500 g of the extrusion flavor containing the lemon flavor of Referential Example 1 was supplied into a Multiplex Model MP-01 (manufactured by Powrex Corporation). Then it was coated by spraying 530 g of the coating agent prepared in Example 10 at a blowing temperature of 60 to 65°C and an exhaust temperature of 30 to 70°C and at a spraying speed of 2 to 3 g/min while maintaining the flowable state. Thus, 500 g of a coated powdered flavor was obtained.

### EXAMPLE 12

20 g of methylcellulose (Metolose SM-4, manufactured by Shin-Etsu Chemical Co., Ltd.) was added to 500 g of water and dispersed therein with heating. Then 10 g of maltodextrin (Pinedex #1, manufactured by Matsutani Chemical Industry Co., Ltd.) was added thereto and dissolved. The obtained solution was cooled and stirred to give 530 g of a homogeneous coating agent.

### EXAMPLE 13

500 g of the extrusion flavor containing the lemon flavor of Referential Example 1 was supplied into a Multiplex Model MP-01 (manufactured by Powrex Corporation). Then it was coated by spraying 530 g of the coating agent prepared in Example 12 at a blowing temperature of 60 to 65°C and an exhaust temperature of 30 to 70°C and at a spraying speed of 2 to 3 g/min while maintaining the flowable state. Thus, 497 g of a coated powdered flavor was obtained.

### EXAMPLE 14

500 g of citric acid having been ground to about 100 µm in particle size was supplied into a Multiplex Model MP-01 (manufactured by Powrex Corporation). Then it was coated by spraying 530 g of the coating agent prepared in Example 5 at a blowing temperature of 60 to 65°C and an exhaust temperature of 30 to 70°C and at a spraying speed of 2 to 3 g/min while maintaining the flowable state. Thus, 492 g of a coated powdery acidulant was obtained.

### EXAMPLE 15

500 g of the extrusion flavor containing the lemon flavor of Referential Example 1 was supplied into a Multiplex Model MP-01 (manufactured by Powrex Corporation). Then it was coated by spraying 2,120 g of the coating agent prepared in Example 1 at a blowing temperature of 60 to 65°C and an exhaust temperature of 30 to 70°C and at a spraying speed of 2 to 3 g/min while maintaining the flowable state. Thus, 528 g of a coated powdered flavor was obtained.

### EXAMPLE 16

500 g of the extrusion flavor containing the lemon flavor of Referential Example 1 was supplied into a Multiplex Model MP-01 (manufactured by Powrex Corporation). Then it was coated by spraying 10.6 g of the coating agent prepared in Example 1 at a liquid supplying temperature of 50°C, a blowing temperature of 65°C and an exhaust temperature of 50°C and at a spraying speed of 20 to 25 g/min while maintaining the flowable state. Thus, 478 g of a coated powdered flavor was obtained.

### EXAMPLE 17

500 g of the extrusion flavor containing the lemon flavor of Referential Example 1 was supplied into a Multiplex Model MP-01 (manufactured by Powrex Corporation). Then it was coated by spraying 3,180 g of the coating agent prepared in Example 5 at a blowing temperature of 60 to 65°C and an exhaust temperature of 30 to 70°C and at a spraying speed of 2 to 3 g/min while maintaining the flowable state. Thus, 548 g of a coated powdered flavor was obtained.

### EXAMPLE 18

500 g of the extrusion flavor containing the lemon flavor of Referential Example 1 was supplied into a Multiplex Model MP-01 (manufactured by Powrex Corporation). Then it was coated by spraying 53 g of the coating agent prepared in Example 5 at a blowing temperature of 60 to 65°C and an exhaust temperature of 30 to 70°C and at a spraying speed of 2 to 3 g/min while maintaining the flowable state. Thus, 480 g of a coated powdered flavor was obtained.

### EXAMPLE 19

20 g of methylcellulose (Metolose SM-4, manufactured by Shin-Etsu Chemical Co., Ltd.) was added to 500 g of water and dispersed therein with heating. Then 0.2 g of dextrin (Pinedex #1, manufactured by Matsutani Chemical Industry Co., Ltd.) was added thereto and dissolved. The obtained solution was cooled and stirred to give 520.2 g of a homogeneous coating agent.

### EXAMPLE 20

500 g of the extrusion flavor containing the lemon flavor of Referential Example 1 was supplied into a Multiplex Model MP-01 (manufactured by Powrex Corporation). Then it was coated by spraying 520.2 g of the coating agent prepared in Example 19 at a blowing temperature of 60 to 65°C and an exhaust temperature of 30 to 70°C and at a spraying speed of 2 to 3 g/min while maintaining the flowable state. Thus, about 500 g of a coated powdered flavor was obtained.

### EXAMPLE 21

20 g of methylcellulose (Metolose SM-4, manufactured by Shin-Etsu Chemical Co., Ltd.) was added to 500 g of water and dispersed therein with heating. Then 12 g of gelatin (AP-200, manufactured by Nitta Gelatin Inc.) was added thereto and dissolved. The obtained solution was cooled and stirred to give 532 g of a homogeneous coating agent.

### EXAMPLE 22

500 g of the extrusion flavor containing the lemon flavor of Referential Example 1 was supplied into a Multiplex Model MP-01 (manufactured by Powrex Corporation). Then it was coated by spraying 532 g of the coating agent prepared in Example 21 at a blowing temperature of 60 to 65°C and an exhaust temperature of 30 to 70°C and at a spraying speed of 20 to 25 g/min while maintaining the flowable state. Thus, 487 g of a coated powdered flavor was obtained.

Each of the powdered flavors obtained in the above Examples 11, 13, 15 to 18, 20 and 22 had the same properties as the powdered flavors of Examples 1, 3 and 5. The coated powdery acidulant of Example 14 was stable at a high temperature and yet excellent in the properties of releasing the acidulant into water upon cooling.

As described above in detail, coated powders which are excellent in the release of core materials, controlled release and taste and can be favorably used for imparting or enhancing aroma and flavor in foods and drinks to be processed by heating, for example, foods for microwave cooking and baked foods can be produced by using coating agent comprising modified celluloses together with edible water-soluble additives and/or edible polymer substances. By using these coated powders in foods for imparting or enhancing aroma and flavor, prepared foods free from the vaporization of aroma and flavor even in cooking by, for example, a microwave oven can be obtained.

While the invention has been described in detail and with reference to specific embodiments thereof, it will be apparent to one skilled in the art that various changes and modifications can be made therein without departing from the scope thereof.

This application is based on Japanese patent application No. 2001-129850 filed April 26, 2001, the entire contents thereof being hereby incorporated by reference.

## Claims

1. A dispersed or dissolved coating agent in the form of a liquor comprising
(a) a thermally reversible gel forming water-soluble cellulose ether, and
(b) in an amount of 0.005 to 0.75 parts by weight of said cellulose at least one of an edible water-soluble additive and an edible polymer substance selected from the group consisting of sucrose fatty acid esters, polyglycerol fatty acid esters, glucose, fructose, sucrose, lactose, maltose, sugar alcohols, water-soluble natural gums, starch, starch derivatives and proteins.

2. A coating agent as claimed in claim 1, wherein the sucrose fatty acid ester has an HLB value of 13 to 15.

3. A coated powder which comprises a core material with a particle size of from 5 to 6000 µm, said core material being solid at ordinary temperature and having been coated with a coating agent as claimed in claim 1 or 2.

4. The coated powder as claimed in claim 3,
wherein the core material is at least one member selected from the group consisting of flavor compositions, spices, coloring materials, acidulants, vitamins, sweeteners, seasonings and functional substances.

5. The coated powder as claimed in claim 4,
wherein the core material is a flavor composition.

6. A process for producing a coated powder, which comprises coating a core material which is solid at ordinary temperature and has a particle size of 5 to 6000 µm with a dispersed or dissolved coating agent in the form of a liquor comprising
(a) a thermally reversible gel forming water-soluble cellulose ether, and
(b) in an amount of 0.005 to 0.75 parts by weight of said cellulose at least one of an edible water-soluble additive and an edible polymer substance selected from the group consisting of sucrose fatty acid esters, polyglycerol fatty acid esters, glucose, fructose, sucrose, lactose, maltose, sugar alcohols, water-soluble natural gums, starch, starch derivatives and proteins,
wherein the amount of the coating agent is from about 0.0006 to about 0.60 parts by weight per part by weight of the core material.

7. The process for producing a coated powder as claimed in claim 6, wherein the core material which is solid at ordinary temperature is coated with the coating agent by the spray drying method, the fluidized bed coating method, the centrifugal coating method or the contact/collision coating method.

8. A food or drink which comprises a coated powder as claimed in any one of claims 3 to 5.

## Patentansprüche

1. Dispergiertes oder aufgelöstes Beschichtungsmittel in Form einer Flüssigkeit, das folgendes umfasst:
(a) einen thermisch reversibel Gel bildenden, wasserlöslichen Celluloseether, und
(b) in einer Menge von 0,005 bis 0,75 Gewichtsteilen der Cellulose mindestens eines eines essbaren, wasserlöslichen Additivs und einer essbaren Polymersubstanz, ausgewählt aus der Gruppe, bestehend aus Saccharose-Fettsäureestern, Polyglycerol-Fettsäureestem, Glucose, Fructose, Saccharose, Laktose, Maltose, Zuckeralkoholen, wasserlöslichen, natürlichen Gummis, Stärke, Stärkederivaten und Proteinen.

2. Beschichtungsmittel gemäß Anspruch 1, worin der Saccharose-Fettsäureester einen HLB-Wert von 13 bis 15 besitzt.

3. Ein beschichtetes Pulver, das ein Kernmaterial mit einer Partikelgröße von 5 bis 6000 µm umfasst, wobei das Kernmaterial bei gewöhnlicher Temperatur fest ist und mit einem Beschichtungsmittel gemäß Anspruch 1 oder 2 beschichtet worden ist.

4. Beschichtetes Pulver gemäß Anspruch 3, wobei das Kernmaterial mindestens ein Bestandteil ist, ausgewählt aus der Gruppe, bestehend aus Aromazusammensetzungen, Gewürzen, Färbematerialien, Säuerungsmitteln, Vitaminen, Süßstoffen, Würzmitteln und funktionellen Substanzen.

5. Beschichtetes Pulver gemäß Anspruch 4, wobei das Kernmaterial eine Aromazusammensetzung ist.

6. Verfahren zur Herstellung eines beschichteten Pulvers, welches das Beschichten eines Kernmaterials, das bei gewöhnlichen Temperaturen fest ist und eine Partikelgröße von 5 bis 6000 µm besitzt, mit einem dispergierten oder aufgelösten Beschichtungsmittel in Form einer Flüssigkeit umfasst, das umfasst
(a) einen thermisch reversibel Gel bildenden, wasserlöslichen Celluloseether, und
(b) in einer Menge von 0,005 bis 0,75 Gewichtsteilen der Cellulose mindestens eines eines essbaren, wasserlöslichen Additivs und einer essbaren Polymersubstanz, ausgewählt aus der Gruppe, bestehend aus Saccharose-Fettsäureestern, Polyglycerol-Fettsäureestern, Glucose, Fructose, Saccharose, Lactose, Maltose, Zuckeralkoholen, wasserlöslichen, natürlichen Gummis, Stärke, Stärkederivaten und Proteinen,
worin die Menge des Beschichtungsmittels von ungefähr 0,0006 bis ungefähr 0,60 Gewichtsteile pro Gewichtsteil des Kernmaterials beträgt.

7. Verfahren zur Herstellung eines beschichteten Pulvers gemäß Anspruch 6, worin das Kernmaterial, das bei gewöhnlicher Temperatur fest ist, mit einem Beschichtungsmittel durch das Sprühtrockenverfahren, das Fließbettbeschichtungsverfahren, das Zentrifugalbeschichtungsverfahren oder das Kontaktkollisionsbeschichtungsverfahren beschichtet ist.

8. Lebensmittel oder Getränk, das ein beschichtetes Pulver gemäß einem der Ansprüche 3 bis 5 umfasst.

## Revendications

1. Agent de revêtement dispersé ou dissous dans la forme d'une liqueur comprenant
(a) un éther de cellulose soluble dans l'eau formant un gel thermiquement réversible et
(b) dans une quantité de 0,005 à 0,75 partie en poids de ladite cellulose, au moins un additif soluble dans l'eau comestible et une substance polymère comestible choisie parmi des esters d'acides gras de saccharose, des esters d'acides gras de polyglycérol, le glucose, le fructose, le saccharose, le lactose, le maltose, des alcools de sucre, des gommes naturelles solubles dans l'eau, de l'amidon, des dérivés d'amidon et des protéines.

2. Agent de revêtement selon la revendication 1, dans lequel l'ester d'acide gras de saccharose présente une valeur HLB de 13 à 15.

3. Poudre revêtue qui comprend un matériau de noyau avec une taille de particules de 5 à 6000 µm, ledit matériau de noyau étant solide à température ambiante et étant revêtu d'un agent de revêtement selon la revendication 1 ou 2.

4. Poudre revêtue selon la revendication 3, dans laquelle le matériau de noyau est au moins un élément choisi parmi des compositions d'arômes, des épices, des matériaux colorants, des acidulants, des vitamines, des édulcorants, des assaisonnements, des épices et des substances fonctionnelles.

5. Poudre revêtue selon la revendication 4, dans laquelle le matériau de noyau est une composition d'arôme.

6. Procédé pour la production d'une poudre revêtue, qui comprend le revêtement d'un matériau de noyau qui est solide à température ambiante et qui présente une taille de particules de 5 à 6000 µm avec un agent de revêtement dispersé ou dissous dans la forme d'une liqueur comprenant
(a) un éther de cellulose soluble dans l'eau formant un gel thermiquement réversible, et
(b) dans une quantité de 0,005 à 0,75 partie en poids de ladite cellulose, au moins un additif soluble dans l'eau comestible et une substance polymère comestible choisie parmi des esters d'acides gras de saccharose, des esters d'acides gras de polyglycérol, le glucose, le fructose, le saccharose, le lactose, le maltose, des alcools de sucre, des gommes naturelles solubles dans l'eau, de l'amidon, des dérivés d'amidon et des protéines,
dans lequel la quantité de l'agent de revêtement est comprise entre environ 0,0006 et environ 0,60 partie en poids par partie en poids du matériau de noyau.

7. Procédé pour la production d'une poudre revêtue selon la revendication 6, dans laquelle le matériau de noyau qui est solide à température ambiante est revêtu avec l'agent de revêtement par le procédé de séchage par pulvérisation, le procédé de revêtement en lit fluidisé, le procédé de revêtement centrifuge ou le procédé de revêtement par contact/collision.

8. Aliment ou boisson qui comprend une poudre revêtue selon l'une quelconque des revendications 3 à 5.
